Europäisches Patentamt

**European Patent Office**

Office européen des brevets

(11) Publication number : **0 314 445 B1**

(12) **EUROPEAN PATENT SPECIFICATION**

(45) Date of publication of patent specification :
**19.02.92 Bulletin 92/08**

(51) Int. Cl.⁵ : **B60C 3/04,** B60C 15/00,
B60C 17/00

(21) Application number : **88310045.5**

(22) Date of filing : **26.10.88**

(54) Safety tyre.

(30) Priority : **27.10.87 JP 272557/87**

(43) Date of publication of application :
**03.05.89 Bulletin 89/18**

(45) Publication of the grant of the patent :
**19.02.92 Bulletin 92/08**

(84) Designated Contracting States :
**DE FR GB**

(56) References cited :
**EP-A- 0 103 984
EP-A- 0 273 056
DE-A- 2 449 668
DE-A- 3 411 909**

(73) Proprietor : **SUMITOMO RUBBER INDUSTRIES
LIMITED
No. 1-1, Tsutsui-cho 1-chome
Chuo-ku Kobe-shi Hyogo 651 (JP)**

(72) Inventor : **Noma, Hiroyuki
16-3, Suzurandai Kitamachi 3-chome Kita-ku
Kobe-shi Hyogo-ken (JP)**
Inventor : **Saitou, Saneta
1 Minatojima Nakamachi, 3-chome Chuo-ku
Kobe-shi Hyogo-ken (JP)**
Inventor : **Ono, Masaharu
1-16-101 Hontamon 3-chome Tarumi-ku
Kobe-shi Hyogo-ken (JP)**

(74) Representative : **Stewart, Charles Geoffrey
SP TYRES UK LIMITED Tyre Technical
Division
Fort Dunlop Birmingham B24 9QT (GB)**

Jouve, 18, rue Saint-Denis, 75001 PARIS

## Description

The present invention relates to a safety tyre, more particularly to a pneumatic tire which allows a vehicle to be driven to the repair shop if the tyre is deflated due to a burst or a puncture by a nail or the like.

Conventionally, in order to provide safety in the event of puncture or burst, there have been proposed a pneumatic tyre having an elastic support member therein, a pneumatic tyre with a double walled interior structure provided therein with an annular member having an independent airtight chamber, and a pneumatic tyre having an elastic reinforcing layer disposed inside the sidewalls and/or shoulders.

The tyres of the first two kinds are however, accompanied by an increase in weight, and, as compared with normal tyres, are inferior in high speed driving performance. They are also higher in manufacturing cost. The third type is insufficiently effective in load supporting effect. An improved prior art tyre has an aspect ratio of 60% of less, a tread width which is wider than the maximum width of the carcass and tread edges positioned at a height less than the sectional height. This tyre is disclosed in the specification and accompanying drawings of Japanese Patent Application No. 81-11320.

A type according to the preamble of claim 1 is known, e.g. from DE-A-2449668.

It is therefore, an object of the present invention to provide a safety tyre capable of solving all the above-mentioned problems by making the curved shape of the carcass in the sidewalls, especially from the point of the maximum tyre width to the bead, in a predetermined specified shape, so that it is bent easily and uniformly when the internal pressure drops due to puncture and this prevents damage in the bent zone.

According to the present invention, a safety tyre has a tread portion, a pair of bead portions, a pair of sidewall portions therebetween, a pair of bead cores one disposed in each bead portion, a carcass extending between said bead portions through said sidewall portions and the tread portion and turned up in both edges around the bead cores to be secured thereto to form carcass turnup portions and a main carcass portion therebetween, a belt disposed between the tread and the carcass and having cords laid at a relatively small angle to the tyre equator, and a pair of bead apexes one disposed between the carcass main portion and each of the carcass turnup portions, and, when the tyre is assembled on its specified rim and inflated to its design specified pressure, the aspect ratio of the tyre which is defined as the tyre sectional height the tyre maximum width is not more than 80%, the carcass being provided on each side of the tyre equator with a convex arc part and a concave arc part, both arc parts being smoothly connected at an inflection point therebetween, the convex arc part extending radially inwardly from the point of the maximum width WC of the carcass to the inflection point and the concave arc part extending radially inwardly from the inflection point to the area where the carcass contacts the bead core, characterized in that the axial width of the tread is greater than the maximum width WC of the carcass, each edge of the tread is positioned at a height within a range of 50 to 100% of the sectional height HC of said carcass, the convex arc part has its centre of curvature positioned inwards of the tyre with a radius R1 and the concave arc part has its centre of curvature positioned outwardly of the tyre with a radius R2, and the radius R2 of said concave arc part is greater than the radius R1 of said convex arc part .

Preferably, the ratio R1/R2 is greater than 0.5 and smaller than 1.0.

An embodiment of the present invention will now be described with reference to the accompanying diagrammatic drawings in which:

Fig. 1 is a half sectional view showing one embodiment of the present invention

Fig. 2 is sectional view showing the tyre deflated and

Fig. 3 is perspective view showing the tyre without carcass, belt or other constituents.

A safety tyre 1 has bead portions 3 through which annular bead cores 2 pass, sidewall portions 4 extending from each bead portion 3 radially outwardly and a tread portion 5 extending between the upper ends of the sidewalls 4 to provide a toroidal shape. The tyre has a reinforcement carcass 6 having a main portion extending through the sidewall portions 4 and the tread portion 5 and contacting the bead cores 2 in the bead portions 3, and further having turnup portions turned up from the inside to the outside of the tyre. An annular rubber tread is provided on the carcass to provide the tread portion.

In this embodiment, the carcass 6 is of two radial plies, an inner ply 6A and an outer ply 6B. The cords of the carcass plies 6A 6B are inclined with respect to the tyre equator at between 60 and 80 degrees, and the carcass cords comprise steel cords or organic fibre cords such as rayon, polyester, nylon, aromatic polyamide or the like.

The tread portion 5 is provided with a reinforcement belt 19 positioned radially outside the carcass 8. The belt 19 is composed of a wide inner ply 19A on the carcass side, and a somewhat narrower outer ply 19B in contact with the upper surface thereof. Each of the belt plies 19A and 19B comprises steel cords inclined at an angle of relatively small degrees to the tyre equator.

Furthermore, the belt 9 includes a band 20 arranged radially outside the belt plies 19A & 19B which covers the entire surface of the belt plies 19A & 19B.

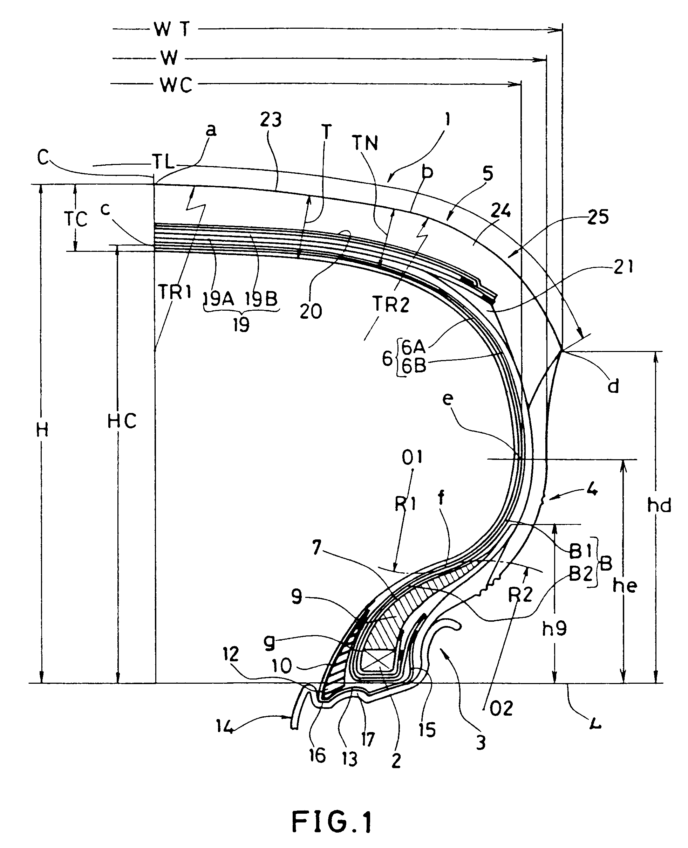

The band 20 is composed of organic fibre cords such as rayon, nylon or polyester, and acts so that the shear stress acting between the outer surface of the belt 19 and the tread rubber when the tyre is deformed is lessened. Thus separation between the belt edges and the surrounding rubber is prevented. Furthermore, between the carcass 6 and each of the belt edge portions, a breaker cushion 21 of soft rubber is provided positioned as shown in Fig.1.

The tyre is designed to have a particular shape when inflated on its designed rim 14.

In this state, the tyre 1 has an aspect ratio of 80% or less where the aspect ratio is defined as the ratio H/W of the tyre inflated sectional height H to the tyre maximum width W. The tyre sectional height (H) is the radial distance of the highest point (a) on the tyre equator C from the bead base line L extending in the tyre axial direction through the inner ends of the carcass 6, and the tyre maximum width W is the maximum width of the tyre in a radial direction in the sidewall portions 5.

The outside of the tread 5, that is the tread surface 25, has a central crown portion 23 having a large radius of curvature TR1 and shoulder portions 24 which have a relatively small radius of curvature TR2 smoothly joined to the crown portion at respective junction zones b.

The shoulder portions 24 are so extended that the edges d thereof are located in the regions corresponding to the sidewall portions of a conventional tyre, so that the distance between the tread edges d, that is, the tread width WT is greater than the maximum width WC of the carcass.

The height hd of the tread edge d from the bead base line L is in the range of 50 to 100% of the section height HC f the carcass 6, that is, the radial height of the highest point c of the central line of the carcass 6b from the bead base line L. When the carcass has an inner and an outer carcass ply 6A, 6B, the central line is between the two plies.

The new tyre thickness T of the tread portion 5, which is the distance between a point on the tyre inner surface and a point on the tread surface 25 in a direction perpendicular to the inner surface, is in the range of 70 to 200% of the mean thickness of the thickness TC at the tyre equator C and the thickness TN at a position apart 3/8 of the distance of the carcass maximum width C from the equator C. If the thickness T is less than 70%, safe running is not maintained if the tyre inner pressure drops. On the hand, if the thickness T is over 200% heat generation in the tread portion 5 tends to be too large in normal inflated high speed use.

Meanwhile, even when the thickness T is less than 200% , it is preferable to enhance the cooling effect by providing a lug pattern in the tread edge regions in order to restrict temperature rise of the tread portion 5 during running.

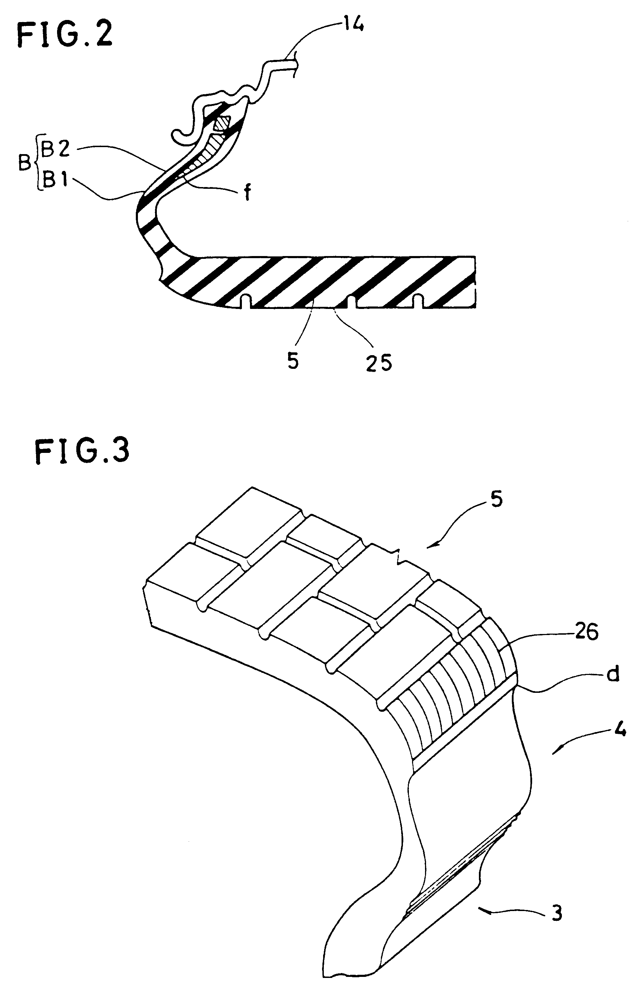

Note that the thickness T extends throughout the tread region into the tread edges. Accordingly, as shown in Fig.2 even when the tread surface 25 of the tread portion 5 becomes entirely flattened when used with a great loss of inflation pressure, the tyre contacts with the ground only in the actual tread region and safe running results.

To provide the necessary rigidity of the tread portion 5, the width of the belt 19 is set in the range of 60 to 100% of the tread length TL, that is, the entire length between the edges d along the tread surface 25, so that the tread portion 5 is provided with enough reinforcement to allow continued use for a relatively long time even when the tread surface 25 is depressed due to a drop of inflation pressure.

For the cords of the belt 19, organic fibre cords, such as nylon, polyester or rayon, with a modulus of elasticity not more than 1000 kg/sq.mm are preferably used. When cords with high modulus of elasticity, such as aromatic polyamide fibre cords or steel cords, are used alone or together with lower modulus cords, the width of this fibre cord ply of the greater modulus of elasticity should be 80% or less of the maximum width WC of the carcass.

By forming the belt 19 of organic fibre cords of relatively low modulus of elasticity, it is possible to follow up the deformation of the carcass while keeping the hoop effect of the carcass 6 at the time of deformation.

Furthermore, as shown in Fig.3, the tyre 1 is provided with radially extending sipelike or slitlike fine grooves 26 of 0.1 to 5mm width in the tread edge regions in each tyre shoulder spaced at intervals of 5 to 20mm in the circumferential direction of the tyre.

The fine grooves 26 may alternatively be formed in any direction, for example, the tyre axial direction, a direction parallel to the tyre equator C or any direction therebetween. If the fine grooves 26 extending in a direction between a direction parallel to the tyre equator and a direction with an inclination of 45 degrees thereto, a cooling effect to the tread portion 5 is obtained and additionally the longitudinal spring constant of the tread portion may be decreased. Furthermore, if extended in a direction between a normal direction to the tyres equator and a direction with an inclination of 45 degrees thereto, the cooling effect is further enhanced.

The fine grooves 26 have a length of 5 to 20% of the length TL of the tread surface 25, and are formed from the respective edges d or from just inwards therefrom.

Between the carcass 6 and each bead core 2, a reinforcing layer 7 is disposed to prevent friction therebetween when the carcass 6 moves due to deformation of the tyre.

Further, in order to increase the rigidity of each bead portion 3, a bead apex 9 is disposed radially outside the bead core 2 between the carcass main portion and the turnup portion and also between the axially inner and outer portions of the reinforcing layer 7. Each bead apex extends radially outward and tapers to a point.

The height h9 of the tip of the bead apex in the radial direction from the bead base line L is in the range of 40 to 90% more preferably 70 to 80%, of the height hd of the tread edge d. Thus when the tyre internal pressure is lowered, the bent zone B from the the carcass maximum width point e to the bead base line L has a deformation which keeps the standard curvature shape, while maintaining the lateral rigidity.

For this purpose, the bead apex 9 is made of rubber having a JIS A hardness of a relatively high range of 74 to 95 degrees.

On each side of the tyre equatorial plane C, the part of the carcass 6 in the bent zone B comprises a convex arc part B1 extending up to the carcass maximum width point e, and a concave arc part B2 extending to the bead core 2. The two arc parts B1 & B2 are smoothly connected at an inflection point f.

The convex arc part B1 is shaped in an arc with a radius of R1 which has a centre point 01 positioned inside the tyre and it continues from the point e to the inflection point f.

The concave arc part B2 is also shaped in an arc with a radius R2 which has a centre point 02 positioned outside the tyre. This provides a shape concave inwardly of the tyre, and this part extends from the inflection point f to the vicinity of (but somewhere short of) a contact point g at which the carcass 6 meets the bead core 2.

The radius R2 is greater than the radius R1, and the ratio of R1, to R2, that is, R1/R2 is greater than 0.5 and is smaller than 1.0 ($0.5 < R1/R2 < 1.0$), so that the concave arc part B1 has a smaller curvature than the convex arc part B1. Such radii R1, R2 are based on the assumption that the above mentioned arcs pass through the centre of the carcass 6 in the thicknesswise direction.

By forming the above mentioned bent zone B by using these two arc parts B1, B2, as shown in Fig,2 when the internal pressure is lowered due to puncture or the like, the concave arc part B2 collapse with the inflection point f outside in the axial direction, while the sidewall portion 4 is smoothly deformed in a convex form outwardly, so that the bending is quite natural, thereby preventing concentration of strain in the sidewall portion 5 and avoiding resultant damage when run deflated. Meanwhile, by setting the radius R1 smaller than the radius R2, this collapsing is made smooth, and concentration of the strain is alleviated. Note that if the radius R2 is set smaller than the radius R1, excessive bending occurs at the bead portion 3, and the bead portion 3, and the bead portion 3 may be easily damaged. Still worse smooth bending of the outwardly convex form of the sidewall is prevented, and concentration of strain is likely to be caused. Accordingly, the ratio R1/R2 must be set to be greater than 0.5 and smaller than 1.0.

Furthermore, the ratio he/HC of the radial height he of the point e of the carcass maximum width WC from the bead base line L, to the section height HC of the carcass, is arranged to be more than 0.4 and less than 0.6. If the ratio he/HC is smaller than 0.4, or the point e of the maximum width WC of the carcass is brought closer to the bead, both the radii of curvature R1, R2 become small, and the sidewall portions 4 and bead portions are extremely bent and damaged on running deflated. If the ratio he/HC is greater than 0.6, an excessive stress is, likely to occur in the buttress part of then tyre, which makes it difficult to lessen strain concentration.

In each bead portion 3 an inner filler 10 made of hard rubber having an approximately triangular form and which is wider radially inwardly is disposed axially inside the carcass 6 so as to form a bead toe 12 at the inner end thereof, which projects radially inwardly from the bead base line L.

The base of each bead portion 3 is provided axially outwardly of the toe 12 with a circumferentially extending groove 13 having a concave section adjacent to the toe 12.

A chafer 15 of organic fibre cords is disposed along the outline of the bead portion to cover the length from the axially inner region of the bead portion to the groove 13 through the toe 12. The axially outer edge portion of this organic cord chafer is interposed between a rim chafer of hard rubber and the reinforcing layer 7. This toe assembly is to provide bead retention on its wheel rim 14.

The bead portions 3 are fitted into the rim 14, by inserting the bead toes 12 into annular grooves 16 formed in the rim 14, and fitting humps 17 formed in the rim 14 into the grooves 13.

As explained above, in this embodiment, both bead portions are provided with a bead toe 12 and groove 13, but such a bead toe and groove may be formed in only one of them.

According to the specifications shown in Table 1, test tyres having a size 205/65R15 were fabricated as working example tyres (Ex 1 and 2) of the present invention and another as a reference tyre (Ref.1).

Each test tyre was inflated to only 5% of the normal internal pressure to simulate a punctured state, and pressed against a rotary drum at specified load, and rotated by the number of times corresponding to a travelling distance of 5km, and after that the sidewall portions and bead portions were checked for damage, which was evaluated into five ranks. The evaluations are given in Table 1. The greater the score is, the better the result is.

Table 1

| | Ex.1 | Ex.2 | Ref.1 |
|---|---|---|---|
| Carcass | 2 plies Polyester | 2 plies Polyester | 2 plies Polyester |
| Belt | 2 plies Steel | 2 plies Steel | 2 plies Steel |
| Band | 2 plies Nylon | 2 plies Nylon | 2 plies Nylon |
| Aspect ratio (%) | 65 | 65 | 65 |
| Tread width WT (mm) | 209 | 209 | 182 |
| Carcass maximum width WC (mm) | 199 | 195 | 193 |
| Carcass section height HC (mm) | 118 | 118 | 118 |
| Height of carcass maximum width point he (mm) | 60 | 67 | 68 |
| he/HC | 0.51 | 0.57 | 0.58 |
| Height of tread edge hd (mm) | 92 | 100 | 124 |
| hd/HC x 100 (%) | 78 | 85 | 105 |
| R1/R2 | 0.71 | 0.87 | 1.29 |
| Test result score | 5 | 4 | 2 |

As apparent from Table 1, both the working example tyres provided substantially better results than the reference tyre.

Thus, in the safety tyre of the present invention if the tyre pressure drops suddenly due to puncture or the like, the tread becomes flat and allows continued safe travel, and moreover, since the zone from the sidewall portion to the bead portion is smoothly bent, damage in this zone is prevented. Hence the present invention provides a safety tyre able to travel safely for a relatively long distance.

**Claims**

1. A pneumatic tyre having a tread portion (5), a pair of bead portions (3), a pair of sidewall portions (4) therebetween, a pair of bead cores (2) one disposed in each bead portion (3), a carcass (6) extending between said bead portions (3) through said sidewall portions (4) and the tread portion (5) and turned up in both edges around the bead cores (2) to be secured thereto and to form carcass turnup portions and a main carcass portion therebetween, a belt (19) disposed between the tread (5) and the carcass (6) and having cords laid at a relatively small angle to the tyre equator and a pair of bead apexes (9) one disposed between the carcass main portion and each of the carcass turnup portions, and, when the tyre (1) is assembled on its specified rim (14) and inflated to its design specified pressure, the aspect ratio of the tyre which is defined as the tyre sectional height (H)

5

divided by the tyre maximum width (W) is not more than 80% the carcass (6) being provided on each side of the tyre equator with a convex arc part (B1) and a concave arc part (B2), both arc parts (B1,B2) being smoothly connected at an inflection point (f) therebetween, the convex arc part (B1) extending radially inwardly from the point (e) of the maximum width WC of the carcass (6) to the inflection point (f) and the concave arc part (B2) extending radially inwardly from the inflection point (f) to the area where the carcass (6) contacts the bead core (2), characterized in that the axial width (WT) of the tread (5) is greater than the maximum width WC of the carcass (6), each edge (d) of the tread (5) is positioned at a height (hd) within a range of 50 to 100% of the sectional height HC of the carcass (6), the convex arc part (B1) has its centre of curvature (01) positioned inwardly of the tyre with a radius R1 and the concave arc part (B2) has its centre of curvature (02) positioned outwardly of the tyre with a radius R2 and the radius R2 of said concave arc part (B2) is greater than the radius R1 of said convex arc part (B1).

2. A tyre according to claim 1, characterised in that the ratio R1/R2 of said radius R1 to said radius R2 is greater than 0.5 and smaller than 1.0.

3. A tyre according to claim 1 or 2 characterised in that the ratio he/HC of a radial height he of the point (e) of maximum width WC of the carcass (6) from a bead base line (L) to said section height HC of the carcass is greater than 0.4 and smaller than 0.6.

4. A tyre according to any one of claims 1, 2 or 3 characterised in that at least one of said bead portions (3) is provided with a radially inwardly extending toe (12) located axially inside the bead core (2) to engage into an annular groove (16) formed on the rim, and a groove (13) located axially outside said toe (12) to be fitted onto a hump (17) formed on the rim to provide bead retention on the rim.


**Patentansprüche**

1. Luftreifen mit einem Laufstreifenabschnitt (5), einem Paar Wulstabschnitten (3), einem Paar dazwischen befindlichen Seitenwandabschnitten (4), einem Paar Wulstkernen (2), die jeweils einzeln in jedem Wulstabschnitt (3) angeordnet sind, einer sich zwischen den Wulstabschnitten (3) durch die Seitenwandabschnitte (4) und den Laufstreifenabschnitt (5) erstreckende Karkasse (6), die an beiden Kanten um die Wulstkerne (2) zur Befestigung an diesen und zur Bildung von Karkass-Aufschlagabschnitten nach oben umgeschlagen ist, und mit einem Hauptkarkassabschnitt dazwischen, einem zwischen dem Laufstreifen (5) und der Karkasse (6) angeordneten Gürtel (19) mit Korden, die mit relativ kleinem Winkel zu dem Reifenäquator gelegt sind, und einem Paar Wulstreitern (9), die jeweils zwischen dem Karkass-Hauptabschnitt und dem jeweiligen Karkass-Aufschlagabschnitt angeordnet sind, und, wenn der Reifen (1) auf seine angegebene Felge (14) aufgebaut und auf seinen Auslegungs-Aufpumpdruck aufgepumpt ist, einem als die Reifenquerschnittshöhe (H), dividiert durch die maximale Breite (W) des Reifens definierten Querschnittsverhältnis des Reifens, das nicht mehr als 80% beträgt, wobei die Karkasse (6) an jeder Seite des Reifenäquators mit einem konvexen Wölbungsteil (B1) und einem konkaven Wölbungsteil (B2) versehen ist, welche beiden Wölbungsteile (B1, B2) an dem dazwischenliegenden Wendepunkt (f) glatt ineinander übergehen und wovon der konvexe Wölbungsteil (B1) sich von der Stelle (e) der maximalen Breite WC der Karkasse (6) radial nach innen zu dem Wendepunkt (f) erstreckt und der konkave Wölbungsteil (B2) sich von dem Wendepunkt (f) radial nach innen zu dem Bereich erstreckt, wo die Karkasse (6) den Wulstkern (2) berührt, dadurch gekennzeichnet, daß die axiale Breite (WT) des Laufstreifens (5) größer als die maximale Breite WC der Karkasse (6) ist, jede Kante (d) des Laufstreifens an einer Höhe (hd) innerhalb eines Bereichs von 50 bis 100% der Querschnittshöhe HC der Karkasse (6) sitzt, der Krümmungsmittelpunkt (01) des konvexen Wölbungsteils (B1) im Inneren des Reifens mit einem Radius R1 sitzt und der Krümmungsmittelpunkt des konkaven Wölbungsteils (B2) (02) außerhalb des Reifens mit einem Radius R2 sitzt, und der Radius R2 des konkaven Wölbungsteils (B2) größer als der Radius R1 des konvexen Wölbungsteils (B1) ist.

2. Reifen nach Anspruch 1, dadurch gekennzeichnet, daß das Verhältnis R1/R2 des Radius R1 zu dem Radius R2 größer als 0,5 und kleiner als 1,0 ist.

3. Reifen nach Anspruch 1 oder 2, dadurch gekennzeichnet, daß das Verhältnis he/HC der radialen Höhe he der Stele (e) der maximalen Breite WC der Karkasse (6) von einer Wulstgrundlinie (L) zu der Querschnittshöhe (HC) der Karkasse größer als 0,4 und kleiner als 0,6 ist.

4. Reifen nach einem der Ansprüche 1, 2 oder 3, dadurch gekennzeichnet, daß mindestens ein Wulstabschnitt (3) mit einer sich radial nach innen erstreckenden Zehe (12) versehen ist, die axial innerhalb des Wulstkerns (2) angeordnet ist zum Eingriff in eine an der Felge ausgebildeten Ringnut (16), und mit einer axial außerhalb der Zehe (12) angeordneten Nut (13) zum Passen auf einen an der Felge ausgebildete Höcker (17), um Wulstrückhaltung an der Felge zu schaffen.

## Revendications

1. Pneumatique comprenant une partie de bande de roulement (5), une paire de parties de talons (3), une paire de parties de flancs (4) placées entre les parties de talons, une paire de tringles (2) disposées chacune dans une partie de talon (3), une carcasse (6) placée entre les parties de talons (3) et dans les parties de flancs (4) et la partie de bande de roulement (5) et repliée aux deux bords autour des tringles (2) afin qu'elle soit fixée à celles-ci et forme des parties repliées de carcasse et une partie principale de carcasse entre ces dernières, une ceinture (19) placée entre la bande de roulement (5) et la carcasse (6) et ayant des câblés faisant un angle relativement petit avec l'équateur du pneumatique, et une paire de pointes de bourrage de talons (9) disposées chacune entre la partie principale de carcasse et une des parties repliées de carcasse et, lorsque le pneumatique (1) est monté sur la jante spécifiée (14) et est gonflé à la pression nominale spécifiée, le rapport d'allongement du pneumatique, qui est défini comme étant égal à la hauteur en coupe du pneumatique (H) divisée par la largeur maximale du pneumatique (W), n'est pas supérieur à 60 %, la carcasse (6) ayant, de chaque côté de l'équateur du pneumatique, une partie en arc convexe (B1) et une partie en arc concave (B2), les deux parties (B1, B2) étant raccordées progressivement à un point d'inflexion (f) placé entre elles, la partie d'arc convexe (B1) étant disposée radialement vers l'intérieur depuis le point (e) de largeur maximale (WC) de la carcasse (6) jusqu'au point d'inflexion (f) et la partie d'arc concave (B2) étant disposée radialement vers l'intérieur depuis le point d'inflexion (f) jusqu'à la zone dans laquelle la carcasse (6) est au contact de la tringle (2), caractérisé en ce que la largeur axiale (WT) de la bande de roulement (5) est supérieure à la largeur maximale WC de la carcasse (6), chaque bord (d) de la bande de roulement (5) est placé à une hauteur (hd) comprise entre 50 et 100 % de la hauteur en coupe (HC) de la carcasse (6), la partie d'arc convexe (B1) a son centre de courbure (01) placé vers l'intérieur du pneumatique avec un rayon R1 et la partie d'arc concave (B2) a son centre de courbure (02) placé à l'extérieur du pneumatique avec un rayon R2, et le rayon R2 de la partie d'arc concave (B2) est supérieur au rayon R1 de la partie d'arc convexe (B1).

2. Pneumatique selon la revendication 1, caractérisé en ce que le rapport R1/R2 du rayon R1 au rayon R2 est supérieur à 0,5 et inférieur à 1,0.

3. Pneumatique selon la revendication 1 ou 2, caractérisé en ce que le rapport he/HC de la hauteur radiale he du point (e) de largeur maximale WC de la carcasse (6) par rapport à un axe de base de talon (L) et de la hauteur en coupe HC de la carcasse est supérieur à 0,4 et inférieur à 0,6.

4. Pneumatique selon l'une des revendications 1, 2 ou 3, caractérisé en ce que l'une au moins des parties de talons (3) a une pointe (12) disposée radialement vers l'intérieur, placée radialement à l'intérieur de la tringle (2) et destinée à pénétrer dans une gorge annulaire (16) formée sur la jante, et une gorge (13) placée axialement à l'extérieur de la pointe (12) et destinée à se loger sur une saillie (17) formée sur la jante afin que le talon soit retenu sur la jante.

FIG.1

# FIG.2

# FIG.3